# EUROPEAN PATENT SPECIFICATION

(11) **EP 2 052 920 B1**
(45) Date of publication and mention of the grant of the patent: **06.07.2011**
(21) Application number: 08016151.6
(22) Date of filing: 12.09.2008
(51) Int. Cl.: B60R 22/34

(54) **Seat belt retractor and seat belt apparatus having the same**
Sicherheitsgurtaufroller und Sicherheitsgurtvorrichtung damit
Rétracteur de ceinture de sécurité et son appareil de ceinture de sécurité

(30) Priority: 25.10.2007 JP 2007277604
(43) Date of publication of application: 29.04.2009
(73) Proprietor: Takata Corporation, Tokyo 106-8510 (JP)
(72) Inventor: Iura, Yusuke, Tokyo 106-8510 (JP); Yoshioka, Hirokazu, Tokyo 106-8510 (JP); Kameyoshi, Hikaru, Tokyo 106-8510 (JP)
(74) Representative: Banzer, Hans-Jörg

(56) References cited:
- EP-A- 1 738 976
- DE-A1- 10 253 414
- JP-A- 2006 205 821
- US-A1- 2007 001 047

## Description

### Technical Field of the Invention

The present invention relates to a technical field of a seat belt retractor, for retracting a seat belt such that the seat belt can be freely withdrawn and wound, and, more particularly, relates to a seat belt retractor which comprises an energy absorbing mechanism (hereinafter, sometimes referred to as "EA mechanism") and to a seat belt apparatus having the aforementioned seat belt retractor. The EA mechanism is a mechanism which limits load on a seat belt, worn by an occupant, by the action of an energy absorbing member at the time of preventing withdrawal of the seat belt in the event of an emergency such as a collision in which a large deceleration acts on a vehicle, thereby absorbing the energy of the occupant.

### Related Art

Conventionally, a seat belt apparatus installed in a vehicle such as an automobile restrains an occupant with a seat belt in the event of an emergency as mentioned above so as to prevent the occupant from jumping out of a vehicle seat.

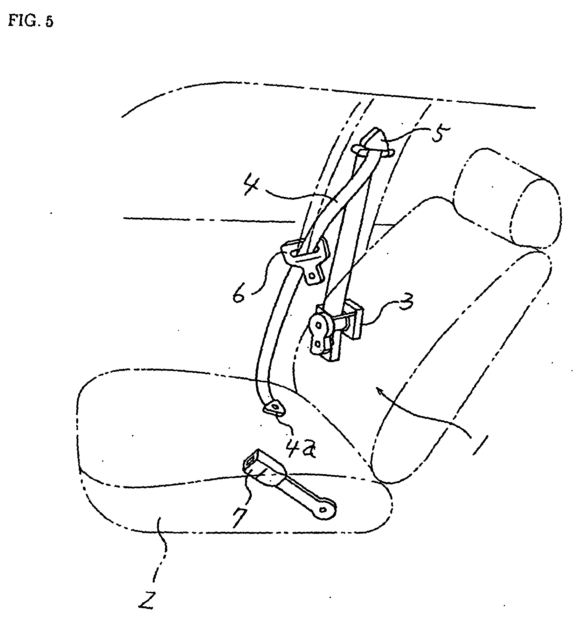

Fig. 5 is an illustration schematically showing a conventionally typical seat belt apparatus. In this drawing, numeral 1 designates a seat belt apparatus, 2 designates a vehicle seat, 3 designates a seat belt retractor which is disposed near the vehicle seat 2, 4 designates a seat belt which is wound by the seat belt retractor 3 such that the seat belt can be withdrawn and which is provided at its end with a belt anchor 4a fixed to a vehicle floor or the vehicle seat 2, 5 designates a deflection fitting for guiding the seat belt 4 withdrawn from the seat belt retractor 3 toward an occupant's shoulder, 6 designates a tongue which is slidably supported by the seat belt 4 guided by and extending from the deflection fitting 5, and 7 designates a buckle which is fixed to the vehicle floor or the vehicle seat and to which the tongue 6 can be inserted and detachably latched.

By the way, conventionally in the seat belt retractor 3 used in the seat belt apparatus 1, a torsion bar is provided as an EA mechanism to absorb the occupant's kinetic energy by limiting the load on the seat belt in the event of an emergency when the occupant wears the seat belt. To effectively obtain limited load, there have been developed various seat belt retractors 3 further comprising another EA mechanism in addition to the torsion bar in which the energy absorption by the torsion bar and the energy absorption by the another EA mechanism are organically combined to conduct EA operation.

As such a seat belt retractor 3, there is known a seat belt retractor 3 in which a long energy absorbing pin (or an energy absorbing wire) inserted into an axial hole of a spool is employed as the another EA mechanism, and the EA operation is conducted by drawing the energy absorbing pin with bending deformation thereof in the event of emergency.

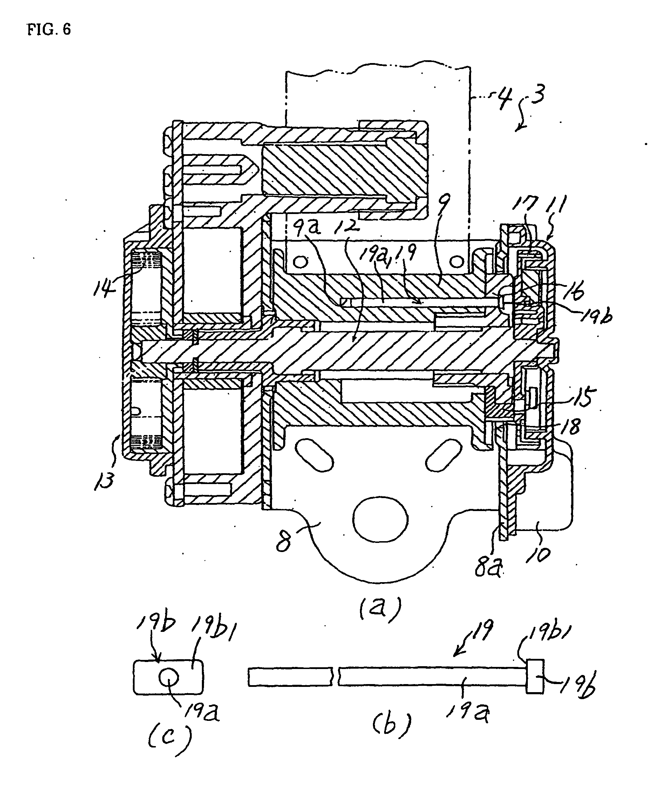

Fig. 6(a) is an illustration schematically showing an example of the conventional seat belt retractor having the energy absorbing pin, Fig. 6(b) is a front view of the energy absorbing pin, and Fig. 6(c) is a left side view of the energy absorbing pin. In the drawings, numeral 3 designates a seat belt retractor, 8 designates a U-like frame, 9 designates a spool which is rotatably supported between both side walls of the U-like frame 8 and onto which the seat belt 4 is wound, 10 designates a deceleration sensing mechanism which senses a large vehicle deceleration generated in the event of an emergency as mentioned above and is thus actuated, 11 designates a locking mechanism which is actuated by the deceleration sensing mechanism 10 at least to prevent the spool 9 from rotating in the belt withdrawing direction during operation, 12 designates a torsion bar as the EA mechanism which is fitted in the center of the spool 9 with some looseness to extend in the axial direction, and 13 designates a spring mechanism which always biases the spool 9 in the belt winding direction by spring force of a spiral spring 14.

The locking mechanism 11 comprises a pawl 15, a locking base (corresponding to the locking member of the present invention) 16 which pivotally supports the pawl 15, and a lock gear 17. The locking base 16 is connected to one end side (the right end side in Fig. 6(a)) of the torsion bar 12 such that the locking base 16 can rotate together with the torsion bar 12. The lock gear 17 is supported by the torsion bar 12. In this case, the lock gear 17 normally rotates together with the torsion bar 12 and the locking base 16, but is stopped from rotating at least in the belt withdrawing direction by the operation of the deceleration sensing mechanism 10 in the event of an emergency. By the stoppage of the rotation in the belt withdrawing direction, a rotational difference is generated in the lock gear 17 relative to the torsion bar 12 and the locking base 16. The pivotal movement of the pawl 15 is controlled by a cam hole (not shown) of the lock gear 17 so that the pawl 15 engages with one of internal teeth 18 of the side wall 8a of the frame 8, thereby preventing the locking base 16 from rotating in the belt withdrawing direction.

The left end side of the torsion bar 12 (a portion on the left end side relative to the middle in the axial direction in Fig. 6(a)) is connected to the spool 9 such that the torsion bar 12 can rotate together with the spool 9. Therefore, though the spool 9 normally rotates together with the torsion bar 12 and the locking base 16, the torsion bar 12 rotates relative to the locking base 16 in the belt withdrawing direction as the locking base 16 is stopped from rotating in the belt withdrawing direction by the operation of the deceleration sensing mechanism 10 in the event of an emergency.

By the spring force of the spring mechanism 13, the spool 9 is always biased in the belt winding direction via the torsion bar 12.

A long energy absorbing pin 19 is arranged between the spool 9 and the locking base 16. As shown in Figs. 6(b) and 6(c), the energy absorbing pin 19 comprises a long shaft portion 19a and a head portion 19b formed at one end of the shaft portion 19a. The shaft portion 19a penetrates the locking base 16 in a direction parallel to the axial direction of the spool 9 and is fitted into an axial hole 9a of the spool 9. The head portion 19b is formed to have a rectangular shape as seen from the side and the surface thereof around the shaft portion 19a functions as a contact surface 19b₁ which engages with the locking base 16. The contact surface 19b₁ is a flat surface and the shaft portion 19a projects vertically from the center of the contact surface 19b₁.

In the conventional seat belt retractor 3 having the aforementioned structure, when the seat belt is not used, the seat belt 4 is fully wound up because of the biasing force of the spring means 13. By withdrawing the seat belt 4 at a normal speed for wearing, the spool 9 rotates in the seat belt withdrawing direction so that the seat belt 4 is smoothly withdrawn. After the tongue 6 slidably attached to the seat belt 4 is inserted into and latched with the buckle 7 fixed to the vehicle body, an excessively withdrawn part of the seat belt 4 is wound onto the spool 9 by the biasing force of the spring means 13 so that the seat belt 4 is fitted to the occupant to the extent that the occupant does not feel stress.

As a vehicle deceleration significantly larger than that in the normal state is generated in the event of an emergency, the deceleration sensing mechanism 10 is activated by the large vehicle deceleration so as to stop the rotation of the lock gear 17 in the belt withdrawing direction. Then, the pivotal movement of the pawl 15 is controlled by a cam control hole of the lock gear 17 so that the pawl 15 engages with one of the internal teeth of the side wall 8a of the frame 8. Since the spool 9 tries to ongoingly rotate in the belt withdrawing direction while the locking base 16 is stopped from rotating in the belt withdrawing direction, the torsion bar 12 is twisted. After that, the spool 9 rotates in the belt withdrawing direction relative to the locking base 16 with twisting the torsion bar 12. By the torsional load of the torsion bar 12 during this, the load applied to the seat belt 4 is limited so as to absorb the impact exerted on the occupant.

By the relative rotation of the spool 9 relative to the locking base 16, a portion 19a₁ of the shaft portion 19a of the energy absorbing pin 19 which is inserted in the axial hole 9a of the spool 9 is drawn from the axial hole 9a. During this, the portion 19a₁ of the shaft portion 19a is drawn with being bent and deformed in the circumferential direction between the spool 9 and the locking base 16. Further, when the energy absorbing pin 19 is subjected to the bending load, the locking base 16 applies force to the contact surface 19b₁ of the head portion 19b of the energy absorbing pin 19 so that the head portion 19b is bent in the circumferential direction about the radial axial line. The load applied to the seat belt 4 can be limited also by the drawing and bending load of the energy absorbing pin 19 composed of the bending deforming force of the portion 19a₁ of the shaft portion 19a, the friction force between the spool 9 and the portion 19a₁ of the shaft portion 19a, and the bending force at the head portion 19b.

The limited load during this is total of the torsional load of the torsion bar 12 and the drawing and bending load composed of the bending load and the friction load of the energy absorbing pin 19. As the portion 19a₁ of the shaft portion 19a of the energy absorbing pin 19 is completely drawn out, the limited load by the energy absorbing pin 19 goes out and the limited load only by the torsional load of the torsion bar 12 exists. As mentioned above, the energy absorption by the torsion bar 12 and the energy absorption by the energy absorbing pin 19 are organically combined, thereby effectively obtaining the limited load.

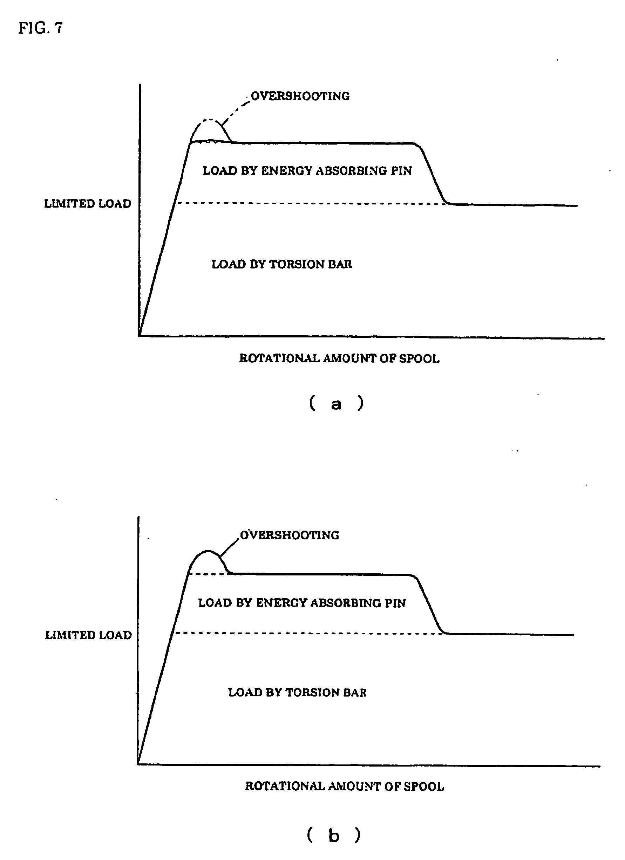

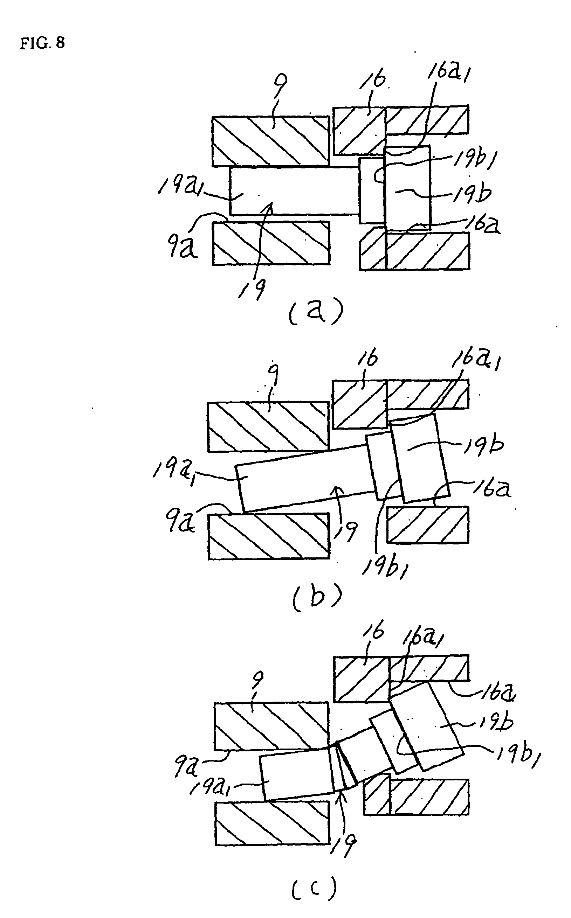

By the way, in the EA mechanism using the energy absorbing pin 19, during transition in the event of an emergency from the normal state as shown in Fig. 8(a) to the state as shown in Fig. 8(b), the drawing and bending load is rapidly increased at an initial stage of the drawing action in which the energy absorbing pin 19 is drawn out by relative rotation of the spool 9 in the belt withdrawing direction relative to the locking base 16. Accordingly, as shown in Fig. 7(b), the limited load overshoots at the initial stage of the drawing action of the energy absorbing pin 19. After the bending and drawing of the energy absorbing pin 19 becomes in a stationary state as shown in Fig. 8(c), the limited load becomes substantially constant without overshooting. The overshooting of the limited load makes the inertial energy of the occupant be hardly efficiently absorbed.

There has been proposed a seat belt retractor capable of preventing the limited load from overshooting at the initial stage of the drawing action of the energy absorbing pin 19 (for example, see JP-A-2006-205821). In the seat belt retractor of JP-A-2006-205821, as shown in Figs. 9(a) and 9(b), the energy absorbing pin 19 is formed in a crank shape. That is, the shaft portion 19a comprises a portion 19a₂, which projects from the head portion 19b and penetrates the locking base 16, a portion 19a₃, which is bent at a right angle from the portion 19a₂ and extends between the spool 9 and the locking base 16, and a portion 19a₁ which is bent at a right angle from the portion 19a₃ and is fitted into the axial hole 9a of the spool 9.

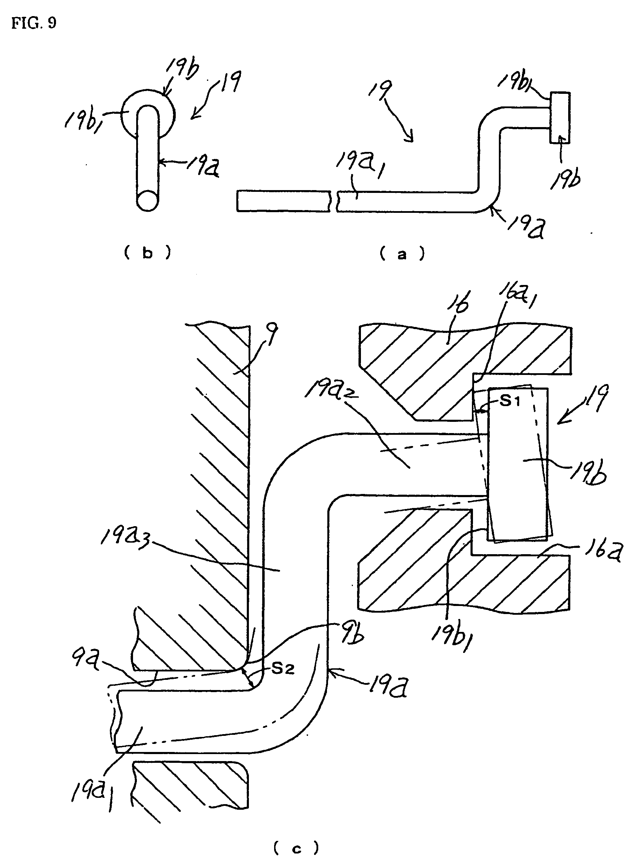

The energy absorbing pin 19 is assembled to the spool 9 and the locking base 16 in the following manner. That is, in the normal state as shown in Fig. 9(c), a predetermined space S₁ is set between the contact surface 19b₁ of the head portion 19b and a bottom surface 16a₁ of a concavity 16a which is formed in the locking base 16 for accommodating the head portion 19b and a predetermined space S₂ is set between a curved portion between the portion 19a₃ and the portion 19a₁ of the shaft portion 19a and an opening edge portion 9b of a drawing-side opening of the axial hole 9a. In this case, the opening edge portion 9b is rounded.

This arrangement allows the shaft portion 19a and the head portion 19b of the energy absorbing pin 19 not to be subjected to bending load immediately after the spool 9 starts to rotate in the belt withdrawing direction relative to the locking base 16. As the spool 9 rotates a predetermined amount relative to the locking base 16, the head portion 19b tilts so that the space S₁ is gone and the contact surface 19b₁ of the head portion 19b comes in contact with the bottom portion 16a₁ of the concavity 16a as shown by two dot chain lines in Fig. 9(c). At this point, a limited load by the bending load of the head portion 19b is generated. In addition, the portion 19a₁ of the shaft portion 19a is drawn so that the space S₂ is gone and the bent portion between the portion 19a₃ and the portion 19a₁ comes in contact with the opening edge portion 9b as also shown by two dot chain lines in Fig. 9(c). At this point, a limited load by the drawing and bending load of the shaft portion 19a is generated.

Therefore, in the initial stage of the EA action, energy is not absorbed by the energy absorbing pin 19, thereby preventing the overshooting of the limited load as shown by solid line in Fig. 7(a).

### Disclosure of the Invention

### Problems to be solved by the Invention

However, in the seat belt retractor disclosed in JP-A-2006-205821, it is required not only to form the energy absorbing pin 19 into a specialized shape or the crank shape but also to ensure the space S₁ between the contact surface 19b₁ of the head portion 19b and the bottom surface 16a₁ of the concavity 16a and the predetermined space S₂ between the bent portion between the portion 19a₃ and the portion 19a₁ of the shaft portion 19a and the opening edge portion 9b of the axial hole 9a with a high degree of accuracy to assemble the energy absorbing pin 19 to the spool 9 and the locking base 16. Accordingly, there are problems that the assembling of the energy absorbing pin 19 is troublesome and also that it is difficult to obtain stable limited load. In addition, these problems also cause problems of poor productivity and high cost.

As shown in Figs. 8(b) and 8(c), a side of the head portion, where is spaced apart from the bottom portion 16a₁ of the concavity 16a of the locking base 16 when the head portion 19b having the flat contact surface 19b₁ tilts, is significantly spaced apart from the bottom portion 16a₁. It is therefore required to form the concavity 16a to be such deep as not to allow the head portion 19b to stick out of the concavity 16a when the head portion 19b tilts. To form the concavity 16a to be deep, the length in the axial direction of the locking base 16 (the rightward direction in Figs. 8(a) through 8(c)) is inevitably increased. Therefore, the positions of retractor components such as the lock gear 17 of the lock mechanism 11 and an inertia body of a webbing sensor should be shifted in the axial direction. As a result, the size in the axial direction of the spool 9 of the seat belt retractor 3 should be increased.

By the way, it is desired in automobiles in recent years to widen the space of the vehicle cabin without increasing the size of the entire automobile. Accordingly, installation spaces for vehicle components disposed within the vehicle cabin have been further limited. Therefore, it is desired to make the seat belt retractor 3 disposed within the vehicle cabin to be small as much as possible. However, as the size of the seat belt retractor 3 is increased as mentioned above, the installation space for the seat belt retractor 3 should be also increased. As a result, it is difficult to flexibly meet the need for reduction in size of the seat belt retractor 3 and the need for the vehicle cabin space as mentioned above.

The present invention was made under the aforementioned circumstances and an object of the present invention is to provide an inexpensive seat belt retractor which allows an energy absorbing pin to be easily assembled and allows for improved productivity even with obtaining stable limited load and to provide a seat belt apparatus employing the seat belt retractor.

Another object of the present invention is to provide a seat belt retractor which can be made compactly even with such an arrangement that a head portion of an energy absorbing pin tilts and to provide a seat belt apparatus employing the seat belt retractor.

### Means to solve the Problems

According to the present invention, these objects are achieved by a seat belt retractor as defined in claim 1 and a seat belt apparatus as defined in claim 5. The dependent claims define preferred and advantageous embodiments of the invention.

To solve the aforementioned problems, a seat belt retractor according to the invention comprises at least: a spool for winding up a seat belt; a locking mechanism having a locking member which rotates together with said spool in the normal state, but is prevented from rotating in a belt withdrawing direction in the event of an emergency so as generate rotational difference relative to said spool; and an energy absorbing pin which is disposed on said spool and said locking member to limit the load applied to said seat belt when the rotational difference is generated between said spool and said locking member, and is characterized in that said energy absorbing pin has a shaft portion which is fitted in a hole of said spool and a head portion which is in contact with said locking member, and a contact surface, to be in contact with said locking member, of said head portion is formed to be a curved surface.

A seat belt retractor according to an embodiment of the invention is characterized in that the rotation of said spool is transmitted to said locking member via a torsion bar.

A seat belt retractor according to an embodiment of the invention is characterized in that the curved surface as the contact surface of said head portion is formed into a spherical shape.

Further, a seat belt retractor according to a further embodiment of the invention is characterized in that said head portion is formed into a rod-like shape, and the curved surface as the contact surface of said head portion is formed to have an arc or elliptical arc cross section in a direction perpendicular to the longitudinal direction of said head portion, and that said head portion is in contact with said locking member such that the longitudinal direction of said head portion extends in a radial direction or substantially radial direction of said locking member.

Furthermore, a seat belt apparatus according to the invention comprises at least: a seat belt retractor for winding up a seat belt; a tongue slidably supported by the seat belt withdrawn from said seat belt retractor; and a buckle to which said tongue can be detachably latched, wherein in the event of an emergency, said seat belt is prevented from being withdrawn by the seat belt retractor so that said seat belt apparatus restrains an occupant, and is characterized in that said seat belt retractor is a seat belt retractor as defined above.

### Effects of the Invention

According to the seat belt retractor of the present invention having the aforementioned structure and the seat belt apparatus comprising the same, the contact surface of the head portion of the energy absorbing pin to be in contact with the locking member is formed in a curved surface, whereby the head portion of the energy absorbing pin is allowed to relatively easily rotate at the initial stage of the drawing action of the energy absorbing pin so that the head portion and the portion of the shaft portion adjacent to the head portion are hardly bent into a crank shape like the conventional case in which the contact surface is flat. This prevents the limited load from rapidly increasing and thus effectively prevents the limited load from overshooting at the initial stage of the EA action.

Further, since the contact surface of the head portion of the energy absorbing pin is just formed to be a curved surface, the energy absorbing pin has a simple structure and can be manufactured easily. In addition, it is not necessary to form the energy absorbing pin into a crank shape so that it is only necessary to simply form the energy absorbing pin linearly. Therefore, the energy absorbing pin can further easily and cheaply manufactured. Since the energy absorbing pin has a simple structure and it is not necessary to set the predetermined spaces with a high degree of accuracy like the seat belt retractor disclosed in JP-A-2006-205821, the energy absorbing pin can be easily assembled to the spool and the locking base and stable limited load can be obtained. This can achieve improved productivity of the seat belt retractor and easily achieve production of inexpensive seat belt retractors.

Even when the head portion of the energy absorbing pin tilts, the head portion is prevented from sticking out in the axial direction of the locking base (the axial direction of the spool), thereby allowing the locking base to be designed with a shorter length in the axial direction. This arrangement can achieve the seat belt retractor having a smaller size, thus increasing the vehicle cabin space of the vehicle. Therefore, the seat belt retractor of the present invention can sufficiently and flexibly meet the need for the vehicle cabin space as mentioned above.

### Brief Explanation of the drawings

Fig. 1 is an illustration schematically showing a part of a seat belt retractor as an embodiment according to the present invention.
Fig. 2(a) is a front view of an example of an energy absorbing pin according to the present invention, Fig. 2(b) is a left side view of the example of Fig. 2(a), Fig. 2(c) is a front view of another example of the energy absorbing pin, Fig. 2(d) is a left side of the example of Fig. 2(d), Fig. 2(e) is a front view of still another example of the energy absorbing pin, and Fig. 2(f) is a left side of the example of Fig. 2(e).
Fig. 3 is a right side view of the locking base in a state that the energy absorbing pin is assembled.
Figs. 4(a) and 4(b) show the behavior of the energy absorbing pin shown in Fig. 2(a), wherein Fig. 4(a) is an illustration showing the normal state thereof and Fig. 4(b) is an illustration showing the state that the energy absorbing pin is drawn and bent in the event of an emergency.
Fig. 5 is an illustration schematically showing an example of a seat belt apparatus.
Fig. 6(a) is a sectional view schematically showing an example of a conventional seat belt retractor with an energy absorbing pin, Fig. 6(b) is a front view of the energy absorbing pin, and Fig. 6(c) is a left side view of the energy absorbing pin.
Fig. 7(a) is a graph showing limited load in which the overshooting of the energy absorbing pin is prevented, and Fig. 7(b) is a graph showing limited load in which the overshooting of the energy absorbing pin occurs.
Figs. 8(a)-8(c) show the behavior of the conventional energy absorbing pin, wherein Fig. 8(a) is an illustration showing the normal state thereof, Fig. 8(b) is an illustration showing the initial state of the drawing and bending action of the energy absorbing pin, and Fig. 8(c) is an illustration showing the state in which the energy absorbing pin is drawn and bent in the event of an emergency.
Figs. 9(a)-9(c) show an energy absorbing pin described in JP-A-2006-205821, wherein Fig. 9(a) is a front view thereof, Fig. 9(b) is a left side view thereof, and Fig. 9(c) is an illustration showing the assembled state of the energy absorbing pin.

### Best Modes for carrying out the Invention

Hereinafter, best modes for carrying out the present invention will be described with reference to the attached drawings.

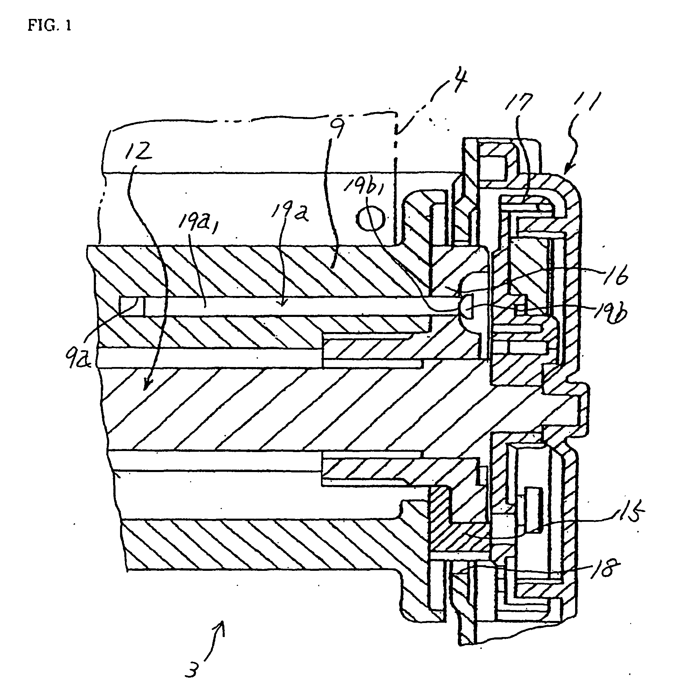

Fig. 1 is an illustration schematically showing a part of a seat belt retractor as an embodiment according to the present invention. In the following description of the embodiment, the same components as those in the aforementioned conventional one are marked with the same numerals so that detailed description thereof will be omitted.

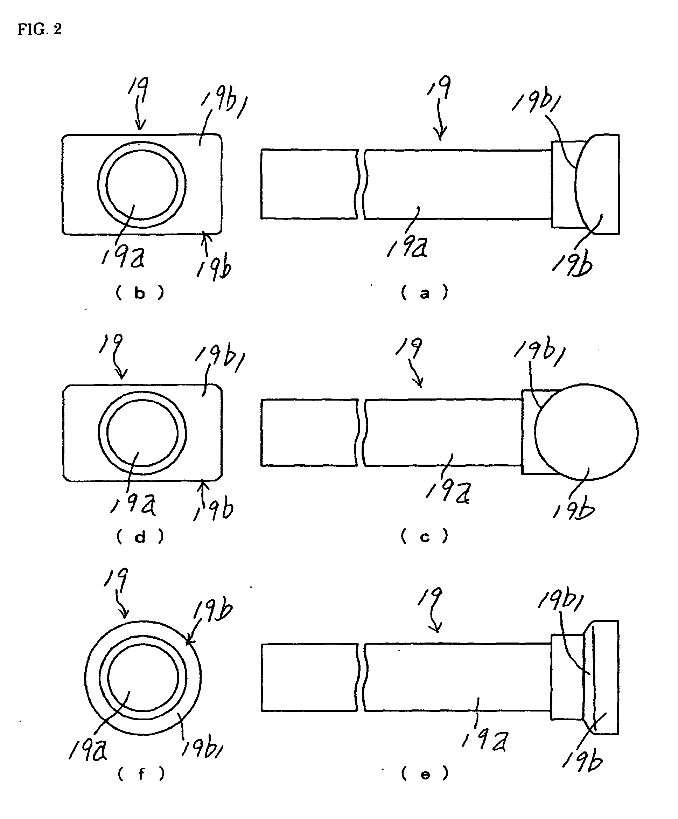

As shown in Fig. 1, the seat belt retractor 3 of this embodiment, an energy absorbing pin 19 penetrates a locking base 16 and a portion 19a₁ of a shaft portion 19a is fitted in an axial hole 9a of a spool 9 similarly to the aforementioned conventional example shown in Figs. 6(a)-6(c). As shown in Fig. 2(a), in the energy absorbing pin 19 of this embodiment, the shaft portion 19a is formed linearly and projects orthogonally from a head portion 19b. The head portion 19b is formed to have a rectangular rod-like shape as seen from a side and has a contact surface 19b₁ of which cross section (a section extending in a direction perpendicular to the longitudinal direction of the head portion 19b) is formed to be a curved surface such as an arc surface or an elliptical arc surface. In this case, the rectangular head portion 19b has a flat surface on the side opposite to the contact surface 19b₁.

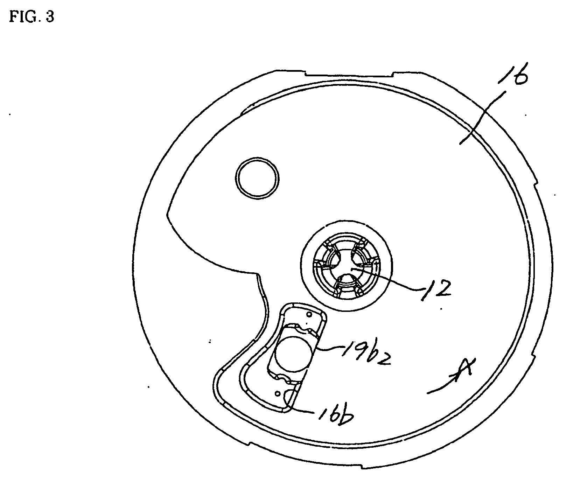

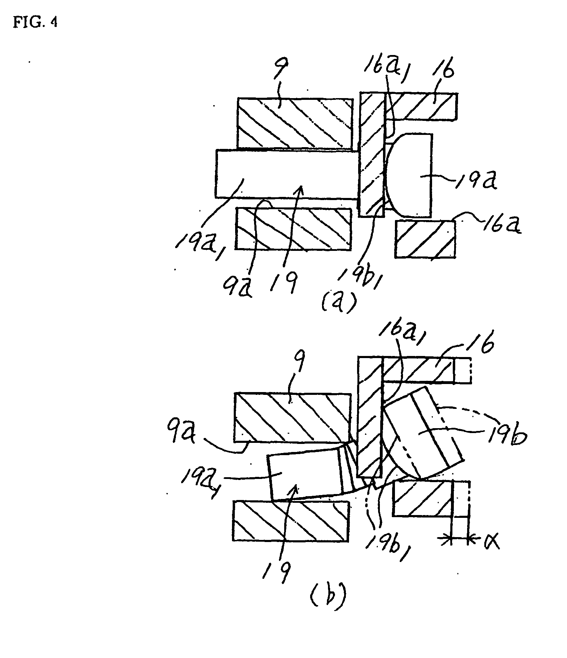

As shown in Fig. 3, an edge 16b of a concavity 16a of the locking base 16 on the α side in the belt withdrawing direction extends linearly in substantially a radial direction of the locking base 16 (a direction substantially perpendicular to the rotational direction of the locking base 16). In a state that the energy absorbing pin 19 is assembled to the locking base 16 and the spool 9, a linear side edge 19b₂ of the head portion 19b of the energy absorbing pin 19 on the α side in the belt withdrawing direction is in plane contact with the edge 16b, on the α side in the belt withdrawing direction, of the concavity 16a of the locking base 16. Also in this state, as shown in Fig. 1 and Fig. 4(a), the curved contact surface 19b₁ is partially in contact with the bottom surface 16a₁ of the concavity 16a of the locking base 16. It should be noted that the edge 16b of the concavity 16a of the locking base 16 may linearly extend in a radial direction of the locking base 16 (in a direction perpendicular to the rotational direction of the locking base 16). In this case, in a state that the energy absorbing pin 19 is assembled to the locking base 16 and the spool 9, the side edge 19b₂ of the head portion 19b of the energy absorbing pin 19 is in plane contact with the edge 16b of the concavity 16a of the locking base 16 in the radial direction.

In the EA mechanism employing the energy absorbing pin 19 in the seat belt retractor 3 according to this embodiment having the aforementioned structure, as the spool 9 rotates in the belt withdrawing direction relative to the locking base 16 in the event of an emergency from the normal state shown in Fig. 4(a), the energy absorbing pin 19 is drawn out. During this, the head portion 19b is subjected to bending force in the rotational direction of the locking base 16 about an axis in the radial direction of the locking base 16. Since the contact surface 19b₁ of the energy absorbing pin 19 is a curved surface so that the head portion 19b is easy to tilt (rotate), the head portion 19b easy tilts about an axis in the radial direction of the locking base 16 as shown in Fig. 4(b). This arrangement does not rapidly increase the limited load at the initial stage of the drawing action of the energy absorbing pin 19, thereby preventing the limited load at the initial stage of the EA action from overshooting. Therefore, as shown in Fig. 7(a), it is possible to obtain substantially constant limited load from the initial stage of the EA action.

The side of the head portion 19b, where is spaced apart from the bottom portion 16a₁ of the concavity 16a when the head portion 19b tilts, is not so spaced apart from the bottom portion 16a₁ as compared to the case of the contact surface 19b₁ is flat. Therefore, the head portion 19b is prevented from sticking out in the axial direction of the locking base 16 (the axial direction of the spool 9) when the head portion 19b tilts. This arrangement allows the length of the locking base 16 in the axial direction to be shorter, as shown by solid lines in Fig. 4(b), than that of the locking base 16 in case of using the conventional energy absorbing pin 19 having the flat contact surface 19b₁ as shown by two dot chain lines in Fig. 4(b). This can achieve the seat belt retractor 3 having a smaller size.

According to the seat belt retractor 3 of this embodiment, the contact surface 19b₁, to be contact with the locking base 16, of the head portion 19b of the energy absorbing pin 19 is formed in a curved surface, whereby the head portion 19b of the energy absorbing pin 19 is allowed to relatively easily rotate at the initial stage of the drawing action of the energy absorbing pin 19 so that the head portion 19b and the portion 19a₂ of the shaft portion 19a adjacent to the head portion 19b are hardly bent into a crank shape like the conventional case in which the contact surface 19b₁ is flat. This prevents the limited load from rapidly increasing and thus effectively prevents the limited load from overshooting at the initial stage of the EA action.

Further, since the contact surface 19b₁ of the head portion 19b is just formed to be a curved surface, the energy absorbing pin 19 of this embodiment has a simple structure and can be manufactured easily. In addition, it is not necessary to form the energy absorbing pin 19 into a crank shape so that it is only necessary to simply form the energy absorbing pin 19 linearly. Therefore, the energy absorbing pin 19 can further easily and cheaply manufactured. Since the energy absorbing pin 19 has a simple structure and it is not necessary to set the predetermined spaces S₁ and S₂ with a high degree of accuracy like the seat belt retractor disclosed in Patent document 1, the energy absorbing pin 19 can be easily assembled to the spool 9 and the locking base 16 and stable limited load can be obtained. This can achieve improved productivity of the seat belt retractor 3 and easily achieve production of inexpensive seat belt retractor 3.

Even when the head portion 19b of the energy absorbing pin 19 tilts, the head portion 19b is prevented from sticking out in the axial direction of the locking base 16 (the axial direction of the spool 9), thereby allowing the locking base 16 to be designed with a shorter length in the axial direction. This arrangement can achieve the seat belt retractor 3 having a smaller size, thus increasing the vehicle cabin space of the vehicle. Therefore, the seat belt retractor 3 of this embodiment can sufficiently and flexibly meet the need for the vehicle cabin space as mentioned above.

Other components of the seat belt retractor 3 of this embodiment are the same as those of the seat belt retractor 3 of the example shown in Fig. 6. The other components and works and effects of the seat belt retractor 3 of the example shown in Fig. 6 are described in, for example, JP-A-2001-58559 and will be easily understood by reading this publication. Therefore, the detailed description of these will be omitted.

The seat belt retractor 3 of this embodiment can be employed in any seat belt apparatus 1 as long as the seat belt apparatus 1 employs the seat belt retractor 3, as well as the seat belt apparatus 1 shown in Fig. 5, for example. Accordingly, an occupant of the vehicle can be efficiently restrained by the seat belt apparatus 1 in the event of an emergency.

Figs. 2(c) through 2(f) are illustrations of energy absorbing pins of other examples according to the embodiment of the present invention, respectively.

An energy absorbing pin 19 of an example shown in Figs. 2(c) and 2(d) has a head portion 19b which is composed of a cylindrical member. The cylindrical member is bonded orthogonally to the shaft portion 19a. That is, the contact surface 19b₁ of the head portion 19b is an arc curved surface. An energy absorbing pin 19 of an example shown in Figs. 2(e) and 2(f) has a head portion 19b having a circular shape as seen from a side which is coaxial to a shaft portion 19a thereof. The contact surface 19b₁ of the head portion 19b is a spherical curved surface. In case of the contact surface composed of the spherical curved surface, the head portion 19b is directionless relative to the locking base in the state that the energy absorbing pin 19 is assembled.

The works and effects of the energy absorbing pin 19 of each example shown in Figs. 2(c) through 2(f) are the same as the works and effects of the energy absorbing pin 19 of the aforementioned example shown in Figs. 2(a) and 2(b).

Other components and works and effects of the seat belt retractor 3 employing the energy absorbing pin 19 of each of the examples shown in Figs. 2(c)-2(f) are the same as those of the example shown in Fig. 1 and Fig. 6.

The seat belt retractor according to the present invention is not limited to the aforementioned embodiments and can be applied to any seat belt retractor employing an energy absorbing pin 19 which is disposed between a spool 9 and a locking base 16 to absorb inertial energy of an occupant in the event of an emergency, within a scope of the claims of the present invention.

### Industrial Applicability

The seat belt retractor of the present invention is suitably used as a seat belt retractor which is used in a seat belt apparatus installed in a vehicle such as an automobile and which prevents a seat belt from being withdrawn while absorbing inertial energy of an occupant by limiting the load applied to the seat belt with an energy absorbing member in the event of an emergency such as a vehicle collision.

## Claims

1. A seat belt retractor (3) comprising at least: a spool (9) for winding up a seat belt (4): a locking mechanism (11) having a locking member (16) which rotates together with said spool (9) in the normal state, but is prevented from rotating in a belt withdrawing direction in the event of an emergency so as generate rotational difference relative to said spool (9); and an energy absorbing pin (19) which is disposed on said spools(9) and said locking member (16) to limit the load applied to said seat belt (4) when the rotational difference is generated between said spool (9) and said locking member (16), wherein
said energy absorbing pin (19) has a shaft portion (19a) which is fitted in a hole (9a) of said spool (9) and a head portion (19b) which is in contact with said locking member (16), **characterised in that** a contact surface (19b₁), to be in contact with said locking member (16), of said head portion (19b) is formed to be a curved surface.

2. A seat belt retractor (3) as claimed in claim 1, wherein the rotation of said spool (9) is transmitted to said locking member (16) via a torsion bar (12).

3. A seat belt retractor (3) as claimed in claim 1 or 2, wherein the curved surface as the contact surface (19b₁) of said head portion (19b) is formed into a spherical shape.

4. A seat belt retractor (3) as claimed in claim 1 or 2, wherein said head portion (19b) is formed into a rod-like shape, and the curved surface as the contact surface (19b₁) of said head portion (19b) is formed to have an arc or elliptical arc cross section in a direction perpendicular to the longitudinal direction of said head portion (19b), and wherein
said head portion (19b) is in contact with said locking member (16) such that the longitudinal direction of said head portion (19b) extends in a radial direction or substantially radial direction of said locking member (16).

5. A seat belt apparatus (1) comprising at least: a seat belt retractor (3) for winding up a seat belt (4); a tongue (6) slidably supported by the seat belt (4) withdrawn from said seat belt retractor (3): and a buckle (7) to which said tongue (6) can be detachably latched, wherein in the event of an emergency, said seat belt (4) is prevented from being withdrawn by the seat belt retractor (3) so that said seat belt apparatus (1) restrains an occupant, and wherein
said seat belt retractor (3) is a seat belt retractor (3) as claimed in any one of claims 1 through 4.

## Patentansprüche

1. Sitzgurtaufrollvorrichtung (3) umfassend zumindest: eine Spule (9) zum Aufwickeln eines Sitzgurts (4); einen Verriegelungsmechanismus (11) mit einem Verriegelungselement (16), welches sich in dem Normalzustand zusammen mit der Spule (9) dreht, aber welches in einem Notfall an einer Drehung in einer Gurtherausziehrichtung gehindert wird, um eine Drehdifferenz bezogen auf die Spule (9) zu erzeugen; und einen energieaufnehmenden Stift (19), welcher in der Spule (9) und dem Verriegelungselement (16) angeordnet ist, um die auf den Sitzgurt (4) angebrachte Last zu begrenzen, wenn die Drehdifferenz zwischen der Spule (9) und dem Verriegelungselement (16) erzeugt wird, wobei
der energieaufnehmende Stift (19) einen Schaftabschnitt (19a), welcher in ein Loch (9a) der Spule (9) eingepasst ist, und einen Kopfabschnitt (19b), welcher in Kontakt mit dem Verriegelungselement (16) ist, aufweist, **dadurch gekennzeichnet, dass** eine Kontaktfläche (19b₁) des Kopfabschnitts (19b) zum Kontaktieren mit dem Verriegelungselement (16) als eine gekrümmte Fläche ausgebildet ist.

2. Sitzgurtaufrollvorrichtung (3) nach Anspruch 1, wobei die Drehung der Spule (9) zu dem Verriegelungselement (16) über einen Torsionsstab (12) übertragen wird.

3. Sitzgurtaufrollvorrichtung (3) nach Anspruch 1 oder 2, wobei die gekrümmte Fläche als die Kontaktfläche (19b₁) des Kopfabschnitts (19b) in einer sphärischen Form ausgebildet ist.

4. Sitzgurtaufrollvorrichtung (3) nach Anspruch 1 oder 2, wobei der Kopfabschnitt (19b) in einer stabähnlichen Form ausgebildet ist, und wobei die gekrümmte Fläche als die Kontaktfläche (19b₁) des Kopfabschnitts (19b) ausgebildet ist, einen Bogen- oder elliptischen Bogenquerschnitt in einer Richtung senkrecht zu der Längsrichtung des Kopfabschnitts (19b) aufzuweisen, und wobei
der Kopfabschnitt (19b) derart in Kontakt mit dem Verriegelungselement (16) ist, dass sich die Längsrichtung des Kopfabschnitts (19b) in einer radialen Richtung oder im Wesentlichen radialen Richtung des Verriegelungselements (16) erstreckt.

5. Sitzgurtvorrichtung (1) umfassend zumindest: eine Sitzgurtaufrollvorrichtung (3) zum Aufwickeln eines Sitzgurts (4); eine Zunge (6), welche verschiebbar von dem von der Sitzgurtaufrollvorrichtung (3) herausgezogenen Sitzgurt (4) gehalten wird; und eine Schnalle (7), mit welcher die Zunge (6) lösbar verriegelt werden kann, wobei in einem Notfall der Sitzgurt (4) derart von der Sitzgurtaufrollvorrichtung (3) an einem Herausziehen gehindert wird, dass die Sitzgurtvorrichtung (1) einen Insassen zurückhält, und wobei
die Sitzgurtaufrollvorrichtung (3) eine Sitzgurtaufrollvorrichtung (3) nach einem der Ansprüche 1-4 ist.

## Revendications

1. Enrouleur de ceinture de sécurité (3) comprenant au moins : une bobine (9) pour enrouler une ceinture de sécurité (4) ; un mécanisme de verrouillage (11) présentant un élément de verrouillage (16) qui tourne avec ladite bobine (9) dans l'état normal, mais est empêché de tourner dans une direction de retrait de la ceinture en cas d'urgence de façon à engendrer une différence de rotation par rapport à ladite bobine (9) ; et une broche d'absorption d'énergie (19) qui est disposée sur ladite bobine (9) et ledit élément de verrouillage (16) pour limiter la charge appliquée à ladite ceinture de sécurité (4) lorsque la différence de rotation est engendrée entre ladite bobine (9) et ledit élément de verrouillage (16), dans lequel
ladite broche d'absorption d'énergie (19) présente une partie de tige (19a) qui est montée dans un orifice (9a) de ladite bobine (9) et une partie de tête (19b) qui est en contact avec ledit élément de verrouillage (16), **caractérisé en ce qu'**une surface de contact (19b₁), destinée à être en contact avec ledit élément de verrouillage (16), de ladite partie de tête (19b) est formée sous forme d'une surface courbe.

2. Enrouleur de ceinture de sécurité (3) selon la revendication 1, dans lequel la rotation de ladite bobine (9) est transmise audit élément de verrouillage (16) via une barre de torsion (12).

3. Enrouleur de ceinture de sécurité (3) selon la revendication 1 ou 2, dans lequel la surface courbe formant la surface de contact (19b₁) de ladite partie de tête (19b) est formée en une forme sphérique.

4. Enrouleur de ceinture de sécurité (3) selon la revendication 1 ou 2, dans lequel ladite partie de tête (19b) est formée sous forme de tige, et la surface courbe formant la surface de contact (19b₁) de ladite partie de tête (19b) est formée pour avoir une section en arc ou arc elliptique dans une direction perpendiculaire à la direction longitudinale de ladite partie de tête (19b), et dans lequel
ladite partie de tête (19b) est en contact avec ledit élément de verrouillage (16) de telle sorte que la direction longitudinale de ladite partie de tête (19b) s'étend dans une direction radiale ou une direction sensiblement radiale dudit organe de verrouillage (16).

5. Dispositif formant ceinture de sécurité (1) comprenant au moins : un enrouleur de ceinture de sécurité (3) pour enrouler une ceinture de sécurité (4) ; une languette (6) supportée de façon coulissante par la ceinture de sécurité (4) lorsqu'elle est retirée dudit enrouleur de ceinture de sécurité (3) ; et une boucle (7) à laquelle ladite languette (6) peut être verrouillée de façon amovible, dans lequel en cas d'urgence, ladite ceinture de sécurité (4) est empêchée d'être retirée par l'enrouleur de ceinture de sécurité (3) de sorte que ledit dispositif formant ceinture de sécurité (1) retient un occupant, et dans lequel
ledit enrouleur de ceinture de sécurité (3) est un enrouleur de ceinture de sécurité (3) selon l'une quelconque des revendications 1 à 4.
